# EUROPÄISCHE PATENTANMELDUNG

(11) **EP 0 734 961 A1**
(43) Veröffentlichungstag der Anmeldung: **02.10.1996**
(21) Anmeldenummer: 96101009.7
(22) Anmeldetag: 25.01.1996
(51) Int. Cl.: B65D 65/46, C09K 17/16

(54) **Eingedickter Bodenverfestiger, sowie diesen enthaltende verpackte Fertigmischung für Bodenbehandlungen**

(30) Priorität: 25.03.1995 DE 19510957
(71) Anmelder: HÜLS AKTIENGESELLSCHAFT, D-45764 Marl (DE)
(72) Erfinder: Trautmann, André, D-45355 Essen (DE); Bloemer, Stephan, D-40591 Düsseldorf (DE); Hausberg, Egbert, D-46514 Schermbeck (DE)

(57) **Zusammenfassung**

Verpackte Fertigmischung für Bodenbehandlungen bestehend aus einem Gebinde mit
- einer sich in Wasser zersetzenden, biologisch abbaubaren äußeren Verpackung,
- mindestens einem ölbeständigen, abbaubaren Inliner, der von der äußeren Verpackung umgeben und aus einer oder mehreren Schichten aufgebaut ist, und
- der Inliner einen eingedickten Bodenverfestiger enthält,
- wobei die äußere Verpackung weitere organische und/oder anorganische Substrate enthält.

## Beschreibung

Methoden der Bodenbehandlung wie z. B. das Begrünen von brachliegenden, unkultivierten Flächen (Halden, Industriebrachen) sind hinlänglich bekannt. Das dabei benutzte Naßsaatverfahren nach DIN 18 918 ist ebenfalls Stand der Technik. Hierzu werden in einem Mischungstank eines speziellen Fahrzeugs (Hydroseeder) die erforderlichen Komponenten einzeln aus den handelsüblichen Gebinden vor Ort eingegeben und in Nasser zu einer homogenen Brühe vermischt. Anschließend wird die so hergestellte Mischung auf die zu befestigende bzw. begrünende Fläche aufgespritzt.

Das Mischen vor Ort liegt u. a. darin begründet, daß der notwendige Bodenverfestiger in speziellen Fässern luftdicht gelagert werden muß, um ein vorzeitiges Abbinden der Masse zu vermeiden. Daraus ergeben sich für den Anwender eine Reihe von Nachteilen. Zum einen muß er für die Entsorgung der Verpackungsmaterialien und der Fässer sorgen. Zum anderen ist die Handhabung der Einsatzstoffe aus verschiedenen Gebinden, sowie das Herstellen der Mischungen unter der Berücksichtigung der benötigten Mengen pro Flächeneinheit arbeits- und kostenintensiv.

Aufgabe der Erfindung war es, diese wesentlichen Nachteile des Standes der Technik zu beseitigen.

Die Aufgabe wurde durch eine verpackte Fertigmischung, sowie durch einen neuen eingedickten Bodenverfestiger gemäß den Patentansprüchen gelöst.

Gegenstand der vorliegenden Erfindung ist somit eine verpackte Fertigmischung für Bodenbehandlungen bestehend aus einem Gebinde mit
- einer sich in Wasser zersetzenden, biologisch abbaubaren äußeren Verpackung,
- mindestens einem ölbeständigen, abbaubaren Inliner, der von der äußeren Verpackung umgeben und aus einer oder mehreren Schichten aufgebaut ist, und
- der Inliner einen eingedickten Bodenverfestiger enthält,
- wobei die äußere Verpackung weitere organische und/oder anorganische Substrate enthält.

Außerdem ist Gegenstand der Erfindung ein eingedickter Bodenverfestiger bestehend aus organischen Bindemitteln und organischen und/oder anorganischen Trägersubstanzen, wobei pro 100 Gew.-Teile organischer Bindemittel 1 bis 20 Gew.-Teile Trägersubstanz enthalten sind.

Der Vorteil der erfindungsgemäß verpackten Fertigmischung liegt darin, daß diese ohne Entfernung und Entsorgung von üblichen Umverpackungen oder Fässern direkt in den Vorratsbehälter eingegeben werden kann. Erst während des Mischens in Gegenwart von Wasser im Mischungstank werden die äußere Verpackung, sowie der Inliner aufgeweicht und mechanisch zerkleinert. Die so hergestellte Mischung kann direkt auf die Böden aufgebracht werden.

Außerdem war es überraschend, daß die erfindungsgemäß eingedickte Masse im Inliner ihre chemischen Eigenschaften beibehält.

Weiterhin war nicht zu erwarten, daß die eingedickte Masse, verpackt in einem abbaubaren, ölbeständigen Inliner, die erforderliche Lager- und Transportstabilität aufweisen würde.

Der erfindungsgemäß eingedickte Bodenverfestiger im Inliner verpackt, weist jedoch die erforderliche mechanische Festigkeit auf.

Die äußere Verpackung der Fertigmischung besteht aus einem sich in Wasser zersetzenden und abbaubaren Material wie z. B. Cellulose, Spezialpapier und/oder Pappe.

Der sogenannte Inliner kann aus einer oder mehreren Schichten bestehen. Er muß so beschaffen sein, daß der enthaltende eingedickte Bodenverfestiger diesen nicht aufweicht, d. h. er muß ölbeständig sein. Außerdem ist es notwendig, daß der Inliner unter Einwirkung von Organismen und UV-Strahlung, also unter normalen Umweltbedingungen, abbaubar ist. Geeignete Materialien für den Inliner sind zum Beispiel mit Kunststoffen oder mit Kunststoffolie beschichtetes Papier oder wasserlösliche, biologisch abbaubare Kunststoffolien, die auch mehrschichtig aufgebaut sein können.

In der äußeren Verpackung können je nach Anwendungszweck der verpackten Fertigmischung weitere organische und/oder anorganische Substrate, wie z. B. Saatgut, Dünger, Pflanzen oder Pflanzenteile, organische Fasern (z. B. Cellulose, Holz, Jute-, Kokosfasern, Stroh, Torf), Flüssigkeit aufnehmende und speichernde Substrate, pH-regulierende Stoffe, weitere Hilfs- und Zusatzstoffe, enthalten sein.

Die Fertigmischungen werden vor Ort direkt in den Mischungstank gegeben. Ein Öffnen der Verpackung oder Umfüllen aus anderen Behältern entfällt. Weiterhin fällt kein zu entsorgendes Verpackungsmaterial im obengenannten Sinne an.

## Patentansprüche

1. Verpackte Fertigmischung für Bodenbehandlungen bestehend aus einem Gebinde mit
- einer sich in Wasser zersetzenden, biologisch abbaubaren äußeren Verpackung,
- mindestens einem ölbeständigen, abbaubaren Inliner, der von der äußeren Verpackung umgeben und aus einer oder mehreren Schichten aufgebaut ist, und
- der Inliner einen eingedickten Bodenverfestiger enthält,
- wobei die äußere Verpackung weitere organische und/oder anorganische Substrate enthält.

2. Verpackte Fertigmischung nach Anspruch 1,
dadurch gekennzeichnet,
daß der Bodenverfestiger in eingedickter Form eingesetzt wird.

3. Verpackte Fertigmischung nach den Ansprüchen 1 oder 2,
dadurch gekennzeichnet,
daß als weitere Substrate Saatgut, Dünger, Pflanzen oder Pflanzenteile, organische Fasern, mineralische Substrate, Flüssigkeit aufnehmende und speichernde Substrate, pH-regulierende Stoffe, weitere Hilfs- und Zusatzstoffe, enthalten sind.

4. Eingedickter Bodenverfestiger enthaltend organische Bindemittel und organische und/oder anorganische Trägersubstanzen, wobei pro 100 Gew. - Teile organischer Bindemittel 1 bis 20 Gew.-Teile Trägersubstanz eingesetzt werden.

5. Eingedickter Bodenverfestiger nach Anspruch 4,
dadurch gekennzeichnet,
daß das organische Bindemittel aus flüssigem Polybutadienöl besteht.

6. Eingedickter Bodenverfestiger nach den Ansprüchen 2 oder 3,
dadurch gekennzeichnet,
daß die Trägersubstanz ausgewählt wird aus Cellulose, Jute-, Kokosfasern, Baumwolle, Holzteilen, Papierschnipseln, Fell, Hornmehl, Knochenteilen, Stroh, organischem Dünger, Kompost, Steinmehl, Tonmineral, Ziegelbruch, Ziegelmehl, Abbruchmaterial oder Glasschaum.
